# DEMANDE DE BREVET EUROPEEN

(11) **EP 1 110 837 A1**
(43) Date de publication de la demande: **27.06.2001**
(21) Numéro de dépôt: 00403606.7
(22) Date de dépôt: 20.12.2000
(51) Int. Cl.: B60V 3/04, E01B 25/12

(54) **Dispositif d'aiguillage pour véhicules à effet de sol**

(30) Priorité: 24.12.1999 FR 9916480
(71) Demandeur: Poma Otis Systemes de Transport, (Société par actions simplifiée), 38340 Voreppe (FR)
(72) Inventeur: Mollet, Alain, 74940 Annecy le Vieux (FR)
(74) Mandataire: Geismar, Thierry

(57) **Abrégé**

Dispositif d'aiguillage pour véhicules à effet de sol, ledit dispositif comprenant au moins trois sections de voies de guidage et de sustentation pour l'entrée et la sortie des véhicules, au moins une de ces voies étant celle d'entrée des véhicules, ledit dispositif comprenant au moins une surface de sustentation déplaçable (19,20) entre au moins deux positions, chacune desdites positions correspondant à une trajectoire de traversée du dispositif d'aiguillage par les véhicules, les surfaces de sustentation des sections de voies de guidage étant, pour chaque trajectoire, en solution de continuité avec la(les) surface(s) de sustentation déplaçable(s) (19,20).

Le dispositif est caractérisé en ce qu'il comprend au moins un dispositif de guidage auxiliaire (2), fixe sur la majeure partie de sa longueur, des véhicules lors de leur passage à l'aplomb des surfaces de sustentation déplaçables.

Installation de transport par véhicules à effet de sol, notamment de transport automatique de personnes et/ou de produits comprenant au moins un tel dispositif.

## Description

L'invention se rapporte au domaine technique des systèmes de transport de personnes et/ou de marchandises, par des véhicules à effet de sol circulant sur des voies prédéfinies.

On connaît déjà, dans l'art antérieur, différentes conceptions de tels véhicules sur coussin d'air.

Entre 1965 et 1975, l'ingénieur Bertin imagina et expérimenta différentes versions d'un Aérotrain, véhicule à coussin d'air se déplaçant sur un guide en forme de T inversé. Ce projet n'eut pas de suites.

Pour des conceptions ultérieures de trains à coussin d'air, on peut se référer, par exemple, aux documents suivants : WO-A-99/08918, WO-A-97/49592, WO-A-95/26896, WO-A-95/00377.

L'invention se rapporte plus particulièrement, mais non exclusivement aux systèmes de transport automatiques de personnes.

En tant que concept, les systèmes de transport automatiques de personnes (APM Automatic people mover ou AGT automated guideway transit) sont connus depuis une trentaine d'années.

La plupart des APM ont un fonctionnement tel que les véhicules s'arrêtent en station, l'intervalle entre les véhicules étant par exemple de l'ordre de 30 à 90 secondes.

Certains APM ont un fonctionnement semi-continu, les véhicules ralentissant en station jusqu'à une vitesse compatible avec la montée et la descente des passagers.

La plupart des APM installés dans les années 1970 étaient implantés dans des complexes tels que centres d'affaires, aéroports, parcs d'attraction, campus universitaires. Connus sous l'appellation SLT (Shuttle loop transit), ces APM comprenaient des véhicules de dimensions moyennes cheminant sur un réseau comprenant peu d'aiguillages.

Diverses techniques de propulsion ont été employées ou envisagées autopropulsion par moteur électrique, moteur à induction, traction par câble.

Dans le cas d'une traction par câble, les véhicules des APM connus dans l'art antérieur sont soit fixés en continu au câble tracteur soit pourvus d'une pince permettant la saisie du câble tracteur à l'arrêt du véhicule ou en vol.

Diverses suspensions ont été employées ou envisagées pour ces APM.

Le plus souvent, il s'agit de roues acier, pneus en polyuréthane, pneu caoutchouc.

Des suspensions par lévitation magnétique ou coussin d'air sont nettement plus rarement rencontrées, car elles posent de nombreux problèmes techniques, en particulier pour le changement de voies.

La fiabilité de tels systèmes de transport doit de plus être très élevée, de l'ordre de 99,5% et plus, en particulier lorsqu'ils sont prévus pour le transport de passagers dans un aéroport, les exploitants des APM pouvant être contraints de payer des pénalités extrêmement élevées lors de pannes empêchant les passagers de l'APM de prendre leur avion.

L'invention révèle un dispositif pour le changement de voie de véhicules à effet de sol, en particulier mais non exclusivement pour les véhicules à coussin d'air, aptes à assurer le transport automatique de personnes et/ou de produits.

On connaît déjà des dispositifs de changement de voie pour ce genre de véhicule.

Ainsi, les documents FR 1 575 761 et FR 1 399 587 décrivent des dispositifs comprenant un élément mobile assurant le changement de voie. Un élément de guidage solidaire de l'élément mobile assure le guidage du véhicule lors du changement de voie.

II existe également des dispositifs dans lesquels l'élément de guidage est fixe tel que décrit dans le document GB 1 354 888.

Ces dispositifs présentent toutefois plusieurs inconvénients que l'invention vise à résoudre.

Notamment le dispositif de l'invention permet d'améliorer le guidage du véhicule lors du changement de voie et la fiabilité du changement de voie.

Par ailleurs, lors du changement de voie, le dispositif ne nécessite pas de déplacement d'éléments sur le véhicule.

L'invention se rapporte selon un premier aspect, à un dispositif d'aiguillage pour véhicules à effet de sol, ledit dispositif comprenant au moins trois sections de voies de guidage et de sustentation pour l'entrée et la sortie des véhicules, au moins une de ces voies étant celle d'entrée des véhicules, ce dispositif comprenant au moins une surface de sustentation déplaçable entre au moins deux positions, chacune desdites positions correspondant à une trajectoire de traversée du dispositif d'aiguillage par les véhicules, les surfaces de sustentation des sections de voies de guidage étant, pour chaque trajectoire, en solution de continuité avec la(les) surface(s) de sustentation déplaçable(s).

Le dispositif est caractérisé en ce qu'il comprend au moins un dispositif de guidage auxiliaire, fixe sur la majeure partie de sa longueur, des véhicules lors de leur passage à l'aplomb des surfaces de sustentation déplaçables.

Selon différentes variantes de réalisation, le dispositif présente les caractères suivants pris seuls ou en combinaison :
- il comprend deux surfaces de sustentation simultanément déplaçables, mobiles par rapport à deux axes de rotation sensiblement perpendiculaires à leurs plans moyens ;
- les deux surfaces de sustentation déplaçables sont sensiblement planes et s'étendent dans un même plan ;
- les surfaces de sustentation sont déplaçables entre deux positions extrêmes correspondant à deux trajectoires de traversée du dispositif pourvu de trois sections d'entrée et sortie des véhicules ;
- il comprend au moins un dispositif de guidage des véhicules lors de leur passage à l'aplomb des surfaces de sustentation déplaçables ;
- le dispositif de guidage comprend au moins un rail auxiliaire coopérant avec un galet ou tout autre moyen de guidage auxiliaire équivalent, solidaire du châssis des véhicules ;
- le galet de guidage auxiliaire est plaqué contre une face externe du rail de guidage auxiliaire, un galet principal solidaire du châssis des véhicules étant en outre plaqué contre une surface interne de guidage ;
- la surface interne de guidage est formée par une semelle d'un rail placé au dessus du rail de guidage auxiliaire.

L'invention se rapporte, selon un deuxième aspect, à une installation de transport par véhicules à effets de sol comprenant au moins un dispositif tel que présenté ci dessus.

Selon certaines réalisations :
- l'installation est à entraînement des véhicules par câble ;
- le câble est disposé à défilement dans une cavité centrale limitée par deux bandes de rives dont les surfaces supérieures forment plan de sustentation des véhicules ;
- les véhicules sont pourvus de pinces débrayables permettant la saisie et le relâchement du câble tracteur.

D'autres objets et avantages de l'invention apparaîtront au cours de la description suivante de modes de réalisations, description qui va être faîte en se référant aux dessins annexés, dans lesquels :
- la figure 1 est une vue schématique de dessus d'un système de changement de voie selon un mode de réalisation de l'invention ;
- les figures 2a et 2b sont deux vues schématiques de face d'un véhicule de transport à effet de sol apte à circuler sur les voies représentées en figure 1 selon deux modes de réalisation distincts ;
- la figure 3 est une vue de dessus plus détaillée de la zone référencée III de la figure 1 ;
- la figure 3a est une vue de dessus plus détaillée de la zone référencée III de la figure 1 suivant un autre mode de réalisation ;
- la figure 4 est une vue de dessus plus détaillée de la zone référencée IV. ;
- la figure 5 est une vue de dessus de détail de la zone référencée IV, selon une variante de réalisation.

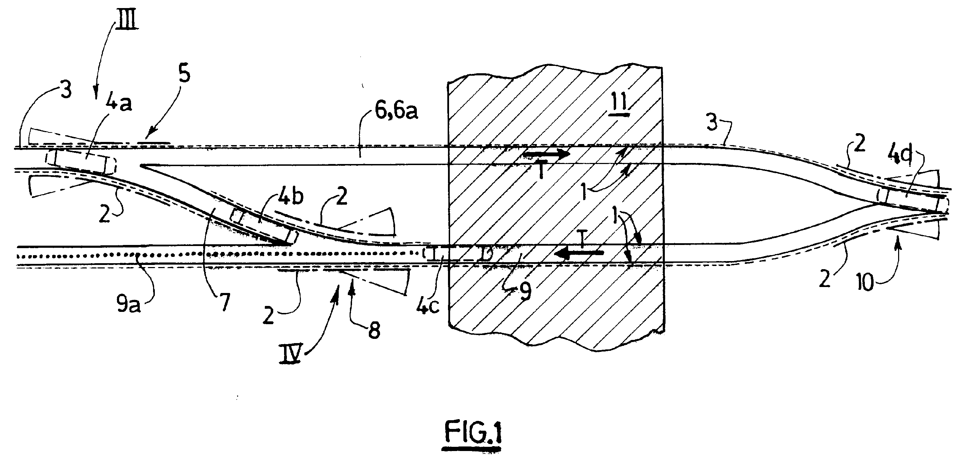

On se rapporte tout d'abord à la figure 1.

Les traits continus schématisent la position des rails de guidage principaux 1 des véhicules à effet de sol circulant sur les voies.

Les tirets forts schématisent la position des rails de guidage auxiliaires 2 des véhicules à effet de sol, lors de leurs passages dans les zones de changement de voie, par la suite désignées zones d'aiguillage.

Les tirets fins schématisent la position des rails d'alimentation électriques 3 de l'installation de transport.

Quatre véhicules 4a, 4b, 4c, 4d sont schématisés sur la figure 1.

Par la suite, les termes « amont », « aval » seront employés par référence aux directions de déplacement indiquées par des flèches T en figure 1.

De gauche à droite sur la figure **1,** on rencontre :
- un premier véhicule 4a passant dans une première zone d'aiguillage 5 reliant une première voie de circulation 6 à une voie de transfert 7 ;
- un deuxième véhicule 4b entrant dans la zone de transfert 7, après être passé dans une deuxième zone d'aiguillage 8 qui relie une deuxième voie de circulation 9 à la voie de transfert 7 ;
- un troisième véhicule 4c placé sur la deuxième voie de circulation 9, en amont de la deuxième zone d'aiguillage 8 ;
- un quatrième véhicule 4d placé dans la troisième zone d'aiguillage 10 qui relie la première voie de circulation 6 à la deuxième voie de circulation 9.

Ainsi qu'il apparaîtra clairement à l'homme du métier, le tracé des voies de circulation 6, 9 peut être très différent de celui représenté, pour la partie de réseau hachurée 11 située entre la deuxième zone d'aiguillage 8 et la troisième zone d'aiguillage 10.

La longueur de la voie de transfert 7 peut être supérieure à celle représentée en figure 1.

La portion 9a de deuxième voie de circulation 9 située en aval de la deuxième zone d'aiguillage 8 est, dans la réalisation représentée, sensiblement parallèle à la portion 6a de première voie de circulation 6 située en amont de la première zone d'aiguillage 5.

Dans d'autres réalisations, non représentées, ces portions de voie 6a, 9a ne sont pas parallèles entre elles.

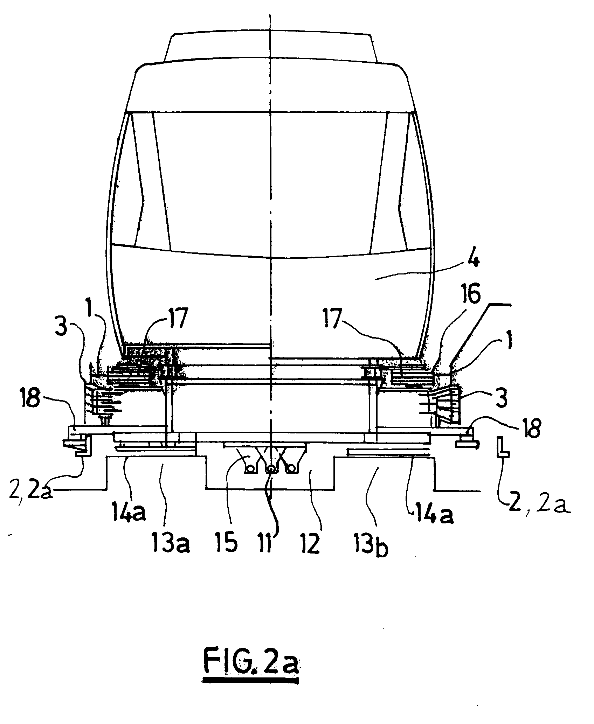

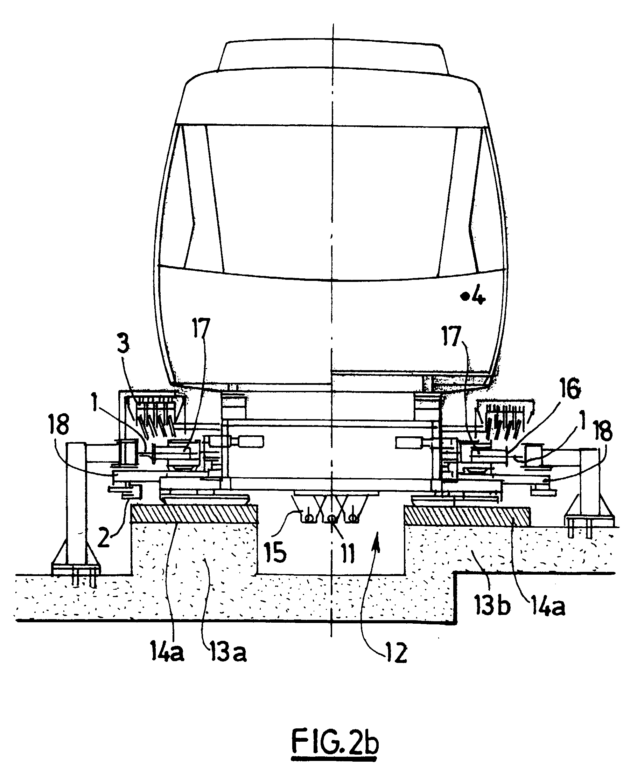

On se rapporte maintenant aux figures 2a, 2b.

Dans les réalisations considérées, les véhicules 4 sont entraînés par un câble 11 en défilement dans une cavité centrale 12 en U limitée par deux bandes de rives 13a, 13b sensiblement parallèles entre elles, les faces supérieures 14a, 14b de ces bandes de rives formant surface de vol.

Les véhicules 4 sont pourvus d'un dispositif d'accouplement au câble fixe ou débrayable.

Dans le mode de réalisation décrit, ce dispositif comprend au moins une pince débrayable 15 saillant vers le bas depuis le châssis des véhicules 4 permet la saisie du câble défilant.

Les rails de guidage principaux 1 sont, par exemple, des profilés en I dont une des semelles 16 est sensiblement en regard de galets roulants 17 solidaires du châssis des véhicules 4. Ces rails de guidage principaux 1 sont fixes.

Ces galets 17 sont plaqués contre les semelles 16 sur lesquelles ils roulent.

Le cas échéant, un dispositif permet la mesure, en continu ou non, de l'effort de plaquage des galets 17 contre les rails de guidage 1.

Les rails de guidage auxiliaire 2 sont, dans les réalisations représentées en figures 2a et 2b, des cornières de section transversale en L.

Des galets roulants 18, solidaires du châssis des véhicules viennent en appui par l'extérieur contre ces cornières 2, lors du passage des véhicules dans les zones d'aiguillage.

Dans le mode de réalisation de la figure 2a, les rails de guidage principaux 1 sont situés au-dessous des rails d'alimentation électrique 3.

Tandis que dans le mode de réalisation de la figure 2b, les rails de guidage principaux 1 sont situés au-dessous des rails d'alimentation électrique 3.

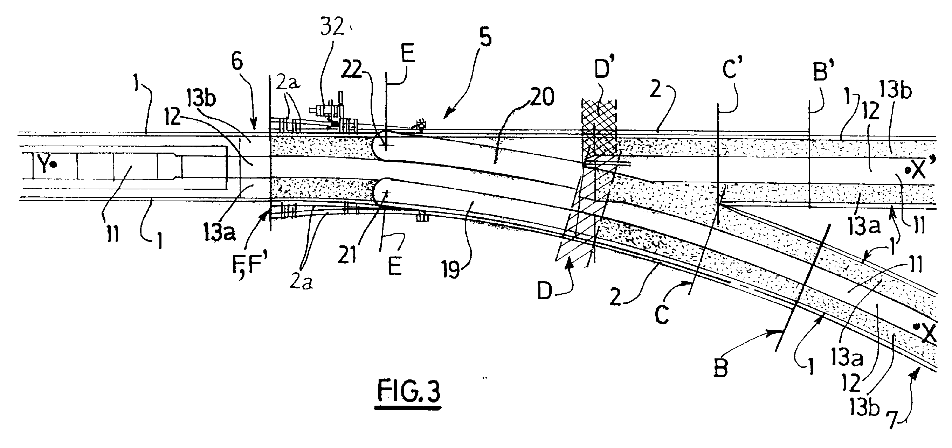

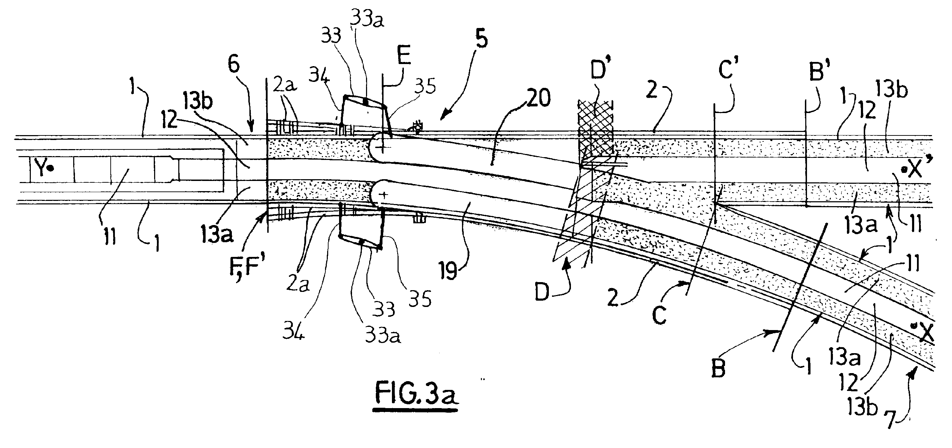

On décrit maintenant plus particulièrement ces zones d'aiguillages, en références aux figures 3, 4 et 5.

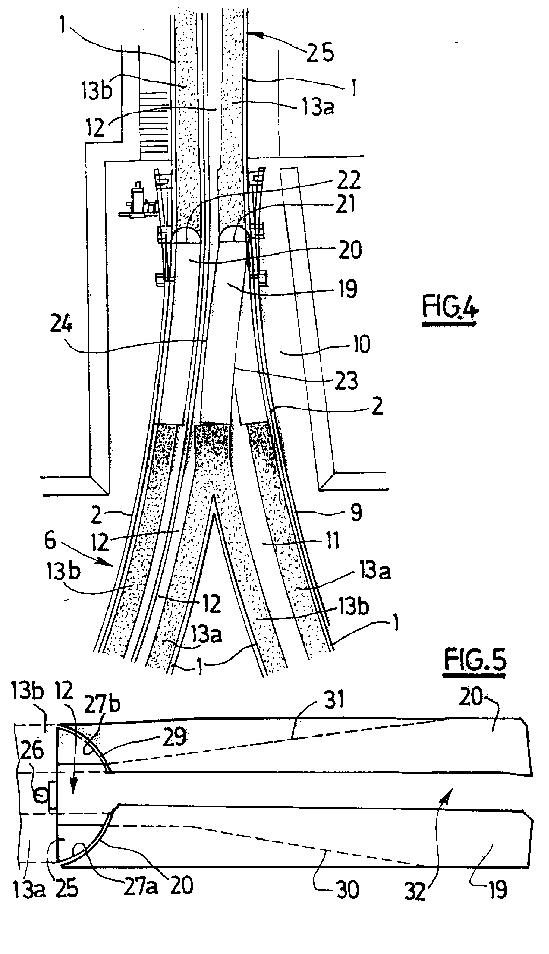

Sur les figures 3 et 4, afin de clarté, les zones support de vol 13a, 13b sont grisées.

Partant d'un point X de la voie de transfert 7 et allant vers la première zone d'aiguillage 5, un véhicule 4 est tout d'abord dans des conditions telles que ses galets de roulement gauche et droit 17 sont en appui contre les rails de guidage principaux droit et gauche 1.

Puis, lorsque l'avant de véhicule arrive au front B un galet auxiliaire 18 du véhicule vient en appui contre un rail de guidage auxiliaire 2, placé en dessous et en regard du rail de guidage principal gauche 1.

Lorsque l'avant du véhicule arrive au front C, le rail de guidage principal droit 1 est interrompu et le véhicule n'est plus guidé que par le rail principal 1 et le rail auxiliaire 2 gauche.

Puis, lorsque l'avant du véhicule 4 entre dans la zone hachurée D, les zones de vol 13a, 13b sont progressivement remplacées par deux zones de vol articulées 19, 20.

L'avant du véhicule parvient ensuite au front E, sensiblement en regard des axes d'articulation verticaux 21, 22 des zones mobiles de vol 19, 20, et retrouve un deuxième rail de guidage principal 1.

Le véhicule est ensuite de nouveau en sustentation sur deux zones de vol 13a, 13b de la première voie principale 6 et le rail de guidage auxiliaire ne s'étend pas au delà de la fin de courbe (front F de la figure 3).

Chaque rail de guidage auxiliaire 2 comprend un tronçon mobile 2a, la majeure partie de la longueur dudit rail de guidage 2 étant fixe.

Ces tronçons mobiles 2a sont articulés autour d'axes verticaux 2b et sont disposés de part et d'autre des zones de vol 13a, 13b, 19, 20.

En référence à la figure 3, l'extrémité libre desdits tronçons mobiles 2a correspond sensiblement au front F.

L'axe d'articulation 2b de chaque tronçon 2a est situé à l'autre extrémité dudit tronçon 2a.

Les axes d'articulation 2b sont disposés sensiblement entre les axes d'articulation verticaux 21, 22 des zones mobiles de vol 19, 20 et les extrémités libres desdites zones 19, 20, à proximité des axes 21, 22.

Le déplacement des tronçons mobiles 2a est commandé par le déplacement des zones mobiles de vol 19, 20 de sorte que les déplacements soient synchronisés.

Ladite commande est réalisée par une liaison mécanique entre les zones mobiles 19, 20 et les tronçons mobiles 2a ou bien par un moteur 32, représenté figure 3, commandant le déplacement des tronçons 2a.

Sur les figures 3 et 3a, les deux positions extrêmes de chaque tronçon 2a sont représentées.

Un mode de réalisation de la liaison mécanique entre les zones mobiles 19, 20 et les tronçons mobiles 2a sont représentés sur la figure 3a.

Cette liaison est réalisée par un ensemble de biellettes 33, 34, 35 entre chaque tronçon mobile 2a et la zone mobile 19, 20 correspondante.

La biellette 33 est mobile en rotation autour d'un axe vertical 33a situé sensiblement en son milieu.

Chaque extrémité de la biellette 33 est articulée à une extrémité des biellettes 34, 35. L'autre extrémité desdites biellettes 34, 35 est articulée respectivement au tronçon 2a et à la zone mobile 19, 20 correspondante.

Dans le mode de réalisation représenté, la biellette 34 est articulée au tronçon 2a sensiblement dans la partie médiane de ce dernier, la biellette 35 étant articulée à l'extrémité de la zone mobile 19, 20 à proximité de son axe de rotation.

Les tronçons mobiles 2a permettent de guider un véhicule se déplaçant du point Y vers le point X ou X' (figures3, 3a).

Lorsque le véhicule se déplace de Y vers X, le tronçon mobile 2a situé du côté de la voie allant en X est mis en place de sorte à venir en prise avec véhicule 4. L'autre tronçon mobile 2a est alors écarté du véhicule 4 (voir par exemple figure 2a).

De même, lorsque le véhicule se déplace de Y vers X', le tronçon mobile 2a situé du côté de la voie allant en X' est mis en place et vient en prise avec le véhicule 4.

Simultanément à la mise en place des tronçons mobiles 2a, les zones mobiles de vol 19, 20 sont orientées vers l'une ou l'autre voie.

Ce qui vient d'être dit en référence à la figure 3 pour un véhicule passant d'un point X de la voie de transfert 7 vers un point Y de la première voie principale peut être transposé par un homme du métier à d'autres trajets de véhicules sur les trois zones d'aiguillages considérées.

Ainsi, en figure 3, partant d'un point X' situé sur la voie principale et allant vers le point Y, l'avant d'un véhicule 4 rencontrera :
- un front B' sur lequel un guidage auxiliaire droit intervient ;
- un front C' sur lequel le guidage principal gauche disparaît ;
- une zone D' de passage des zones de vol 13a, 13b aux zones de vol 19, 20;
- un front E' de fin des zones de vol mobiles 19, 20 ;
- un front F' de fin de guidage auxiliaire droit.

La structure de la deuxième zone d'aiguillage 8 peut être analogue, par symétrie, de celle de la première zone d'aiguillage.

Dans la troisième zone d'aiguillage 10, les zones mobiles de vol 19, 20 présentent des bords latéraux 23, 24 de courbure intermédiaire entre celle de la première et celle de la deuxième voie de circulation 6, 9.

La troisième zone d'aiguillage peut par exemple relier ces deux voies de circulation 6, 9 à une unique gare d'embarquement et de débarquement 25.

Des moyens de motorisation, non représentés, permettent la rotation des surfaces de vol 19, 20 autour des axes 21, 22, en fonction des trajets souhaités pour les véhicules 4.

Bien entendu, les surfaces mobiles 19, 20 sont en continuité avec le plan de sustentation défini par les surfaces 13a, 13b des voies, en amont et en aval de la zone d'aiguillage.

Lorsque, comme représenté en figures 2a, 2b, les véhicules sont à entraînement par câble, un câble de transfert peut être prévu dans chaque zone d'aiguillage de sorte à assurer la continuité du mouvement du véhicule.

Selon une variante de réalisation illustrée sur la figure 5, les surfaces mobiles 19, 20 sont montées, par exemple fixées à demeure, sur un châssis 25 rigide.

Le châssis 25 est déplaçable, et monté pivotant autour d'un axe vertical 26 localisé sensiblement au centre de la cavité centrale 12.

De la sorte, le mouvement du châssis 25 autour de son axe 26 permet la rotation des surfaces 19, 20 pour les placer en continuité avec les surfaces 13a, 13b des voies selon le trajet choisi pour le véhicule 4.
Afin de faciliter la rotation du châssis tout en assurant la continuité de la portance du véhicule 4, les extrémités 27a, 27b des surfaces 13a, 13b des voies et les extrémités 28, 29 des surfaces 19, 20 mobiles, sont de forme sensiblement complémentaire.

Sur la variante de réalisation illustrée sur la figure 5, les extrémités 27a, 27b et 28, 29 sont de forme cylindrique.

En outre, le châssis 25 est, en section transversale, sensiblement en forme de U, et comprend deux branches longitudinales 30, 31 supportant respectivement les surfaces 19, 20, et séparées par une cavité longitudinale 32 située dans le prolongement de la cavité centrale 12.

Selon un mode de réalisation particulier, le châssis 25 et les surfaces 19, 20 forment une unique pièce monobloc.

## Revendications

1. Dispositif d'aiguillage pour véhicules à effet de sol, ledit dispositif comprenant au moins trois sections de voies de guidage et de sustentation pour l'entrée et la sortie des véhicules, au moins une de ces voies étant celle d'entrée des véhicules dans le dispositif, ledit dispositif comprenant au moins une surface de sustentation déplaçable entre au moins deux positions, chacune desdites positions correspondant à une trajectoire de traversée du dispositif d'aiguillage par les véhicules, les surfaces de sustentation des sections de voies de guidage étant, pour chaque trajectoire, en solution de continuité avec la(les) surface(s) de sustentation déplaçable(s), caractérisé en ce qu'il comprend au moins un dispositif de guidage auxiliaire, fixe sur la majeure partie de sa longueur, des véhicules lors de leur passage à l'aplomb des surfaces de sustentation déplaçables.

2. Dispositif selon la revendication 1, caractérisé en ce qu'il comprend deux surfaces de sustentation simultanément déplaçables, mobiles par rapport à deux axes de rotation sensiblement perpendiculaires à leurs plans moyens.

3. Dispositif selon la revendication 1, caractérisé en ce qu'il comprend un châssis portant deux surfaces de sustentation, ledit châssis étant déplaçable, mobile par rapport à un axe de rotation sensiblement perpendiculaire au plan moyén desdites surfaces.

4. Dispositif selon la revendication 2 ou 3, caractérisé en ce que les deux surfaces de sustentation déplaçables sont sensiblement planes et s'étendent dans un même plan.

5. Dispositif selon l'une quelconque des revendications 1 à 4, caractérisé en ce que les surfaces de sustentation sont déplaçables entre deux positions extrêmes correspondant à deux trajectoires de traversée du dispositif pourvu de trois sections d'entrée et sortie des véhicules.

6. Dispositif selon l'une des revendications 1 à 5, caractérisé en ce que le dispositif de guidage comprend au moins un rail auxiliaire coopérant avec un galet ou tout autre moyen de guidage auxiliaire équivalent, solidaire du châssis des véhicules.

7. Dispositif selon la revendication 6, caractérisé en ce que le galet de guidage auxiliaire est plaqué contre une face externe du rail de guidage auxiliaire, un galet principal solidaire du châssis des véhicules étant en outre plaqué contre une surface interne de guidage.

8. Dispositif selon la revendication 7, caractérisé en ce que la surface interne de guidage est formée par une semelle d'un rail placé au-dessus du rail de guidage auxiliaire.

9. Installation de transport par véhicules à effets de sol, caractérisée en ce qu'elle comprend au moins un dispositif selon l'une quelconque des revendications 1 à 8.

10. Installation selon la revendication 9, caractérisée en ce qu'elle est à entraînement des véhicules par câble.

11. Installation selon la revendication 10, caractérisée en ce que le câble est disposé à défilement dans une cavité centrale limitée par deux bandes de rives dont les surfaces supérieures forment plan de sustentation des véhicules.

12. Installation selon la revendication 11, caractérisée en ce que les véhicules sont pourvus d'un dispositif d'accouplement au câble fixe ou débrayable permettant la saisie et le relâchement du câble tracteur.
